# EUROPÄISCHE PATENTSCHRIFT

(11) **EP 2 748 052 B1**
(45) Veröffentlichungstag und Bekanntmachung des Hinweises auf die Patenterteilung: **23.03.2016**
(21) Anmeldenummer: 12737249.8
(22) Anmeldetag: 10.07.2012
(51) Int. Cl.: B62D 15/02, B60W 50/14, B60W 10/18, B60W 10/20, B60W 30/12, B60W 50/16, B62D 6/00

(54) **FAHRERASSISTENZSYSTEM EINES NICHT SPURGEBUNDENEN FAHRZEUGS**
DRIVER ASSISTANCE SYSTEM OF A NON-TRACK-BOUND VEHICLE
SYSTÈME D'AIDE À LA CONDUITE DESTINÉ À UN VÉHICULE NON GUIDÉ SUR RAILS

(30) Priorität: 22.08.2011 DE 102011081320; 22.08.2011 DE 102011081321
(43) Veröffentlichungstag der Anmeldung: 02.07.2014
(73) Patentinhaber: Bayerische Motoren Werke Aktiengesellschaft, 80809 München (DE)
(72) Erfinder: REINISCH, Philipp, 81549 München (DE); PLETSCHEN, Nils, 80637 München (DE); GRESSER, Klaus, 85221 Dachau (DE); ZAHN, Peter, 82211 Herrsching A. Ammersee (DE); WERLING, Moritz, 80809 München (DE)
(86) Internationale Anmeldenummer: PCT/EP2012/063508
(87) Internationale Veröffentlichungsnummer: WO 2013/026616

(56) Entgegenhaltungen:
- EP-A1- 1 884 449
- EP-A1- 2 135 789
- DE-A1- 10 303 870
- US-A1- 2009 187 313

## Beschreibung

Die Erfindung betrifft ein Fahrerassistenzsystem eines nicht spurgebundenen Fahrzeugs, das durch Anlegen eines Lenkmoments an das Lenkrad des Fahrers mittels eines Elektromotors oder dergleichen eine richtungsorientierte Lenkempfehlung an den Fahrer gibt. Zum technischen Umfeld wird neben der EP 1 777 143 B1 auf die DE 103 03 870 A1 und auf die EP 2 135 789 A1 verwiesen.

Ein solches bekanntes Fahrerassistenzsystem kann dem Fahrer in bestimmten Fahrsituationen, so beispielsweise bei einer Autobahnfahrt im Falle eines zur Beibehaltung einer vom Fahrer vorgegebenen und von einem Geschwindigkeitsregelsystem geeignet geregelten Fahrgeschwindigkeit notwendigen Überholmanövers eine haptische Lenkempfehlung über das Lenkrad erteilen. Dazu wird von einem geeignet angesteuerten Motor (Stellmotor) ein gerichtetes Lenkmoment geeigneter Höhe an das Lenkrad des Fahrers angelegt, welches zu einer Änderung des bis dahin eingestellten Lenkradwinkels führen und schließlich einen durch den Fahrer mit seinem Lenkrad gesteuerten Überholvorgang einleiten soll. Die Höhe des vom besagten Motor bzw. vom Fahrerassistenzsystem angelegten Lenkmomentes ist dabei üblicherweise so gewählt, dass der Fahrer stets in der Lage ist, dieses Lenkmoment zu übersteuern und somit die System-Vorgabe zu überstimmen. Die Beaufschlagung des Lenkrads mit einem solchen eine Lenkempfehlung darstellenden Lenkmoment kann dabei auf unterschiedliche Weise erfolgen, so beispielsweise in Form eines Rechteckpulses mit vorgegebener Höhe und Zeitdauer oder in Form eines zunächst linear ansteigenden, dann kurz konstant gehaltenen und anschließend linear abfallenden Lenkmoments oder auch mit Hilfe einer zeitlich nichtlinearen Lenkmoment-Funktion, wobei alle diese und ähnliche Formen unter den eingangs (sowie im Oberbegriff des Anspruchs 1) verwendeten Begriff eines im Sinne einer richtungsorientierten Lenkempfehlung angelegten Lenkmoments fallen sollen.

Aus der DE 103 03 870 A ist ein Fahrerassistenzsystem mit einer einfachen Art einer Spurführung für ein Kraftfahrzeug bekannt, wobei am Lenkrad des Fahrers ein haptisches Signal in einer Vibration erzeugt wird, wenn sich das Fahrzeug in kritischer Nähe zu einer seitlichen Spurgrenze bewegt. Indem am Lenkrad eine im zeitlichen Verlauf asymmetrische quasi vibrierende Drehschwingung erzeugt wird, wird dem Fahrer direkt und/oder intuitiv mitgeteilt, ob sich das Fahrzeug nahe der rechtsseitigen oder nahe der linksseitigen Spurgrenze bewegt. Dabei erfolgt die Vibrations-Auslenkung in diejenige Richtung, in die der Fahrer die Lenkhandhabe führen muss, um das Fahrzeug von der kritischen Spurgrenze wegzubewegen, zeitlich schneller als die Vibrations-Auslenkung in die Gegenrichtung und es können die erzeugten Vibrations-Auslenkungen so ausgelegt sein, dass sie sich aufheben.

Der nächstliegende Stand der Technik ist in der DE 103 03 870 A1 zu sehen.

Die eingangs weiterhin genannte EP 2 135 789 A1 beschreibt ein Fahrerassistenzsystem zur Verhinderung von Kollisionen, wobei unter Berücksichtigung der Eigenbewegung des Fahrzeugs ein ein Hindernis darstellendes Objekt erkannt wird und dann der Fahrer durch zumindest einen an das Lenkrad angelegten Lenkimpuls gewarnt wird, wobei die Intensität dieses (oder dieser) Lenkimpulse(s) von der Reaktion des Fahrers auf diese Warnung abhängig ist.

Zurückkommend auf ein Fahrerassistenzsystem nach dem Oberbegriff des Anspruchs 1 so kann zunächst der Betrag, d.h. die Größe und die Zeitdauer des eine Lenkempfehlung darstellenden Lenkmoments so gewählt sein, dass der Fahrer dieses haptische Signal in ausreichendem Maße wahrnimmt. Dabei dämpft der Fahrer dann, wenn er sein Lenkrad mit den Händen ausreichend fest hält, den aus diesem Lenkmoment resultierenden kurzzeitigen Lenkimpuls des Fahrzeugs stark ab, so dass alleine durch das Assistenzsystem nahezu keine Abweichung des Fahrzeugs vom ursprünglichen Kurs erfolgen wird. Hält jedoch der Fahrer sein Lenkrad nur leicht, bspw. nur mit einer Hand fest oder hat der Fahrer seine Hände sogar vollständig vom Lenkrad entfernt (Hands-Off), so führt der vom Fahrerassistenzsystem aufgeschaltete und kaum gedämpfte Lenkimpuls trotz der relativen kurzen Zeitdauer zu einer erheblichen Abweichung der Fahrzeug-Ausrichtung von der ursprünglichen Fahr-Trajektorie. Will in einem solchen Fall der Fahrer der Empfehlung des Fahrerassistenzsystems nicht folgen, so beispielsweise weil die Nachbar-Fahrspur, in die das Assistenzsystem zu wechseln empfiehlt, jedenfalls nach Einschätzung des Fahrers nicht ausreichend frei ist, so verstreicht zumindest die Reaktionszeit des Fahrers, bis dieser den nicht gewollten Kurs des Fahrzeugs korrigieren kann.

Eine Abhilfemaßnahme für diese geschilderte Problematik aufzuzeigen, ist Aufgabe der vorliegenden Erfindung.

Die Lösung dieser Aufgabe ist für ein Fahrerassistenzsystem eines nicht spurgebundenen Fahrzeugs, das durch Anlegen eines Lenkmoments an das Lenkrad des Fahrers mittels eines Elektromotors oder dergleichen eine richtungsorientierte Lenkempfehlung an den Fahrer gibt, dadurch gekennzeichnet, dass durch dieses Lenkmoment zunächst ein Lenkrad-Winkel im empfohlenen Drehsinn mit einer betragsmäßig größeren Winkelgeschwindigkeit gestellt wird oder zumindest gestellt werden soll und dass danach mit einer betragsmäßig geringeren Winkelgeschwindigkeit ein Lenkrad-Winkel im entgegengesetzten Drehsinn gestellt wird oder zumindest gestellt werden soll, wobei dieses Verfahren mit der vom Fahrer an das Lenkrad angelegten Kraft als Störgröße selbstregelnd durchgeführt wird, indem bei niedriger vom Fahrer an das Lenkrad angelegten Kraft das durch den besagten Elektromotor an das Lenkrad angelegte Lenkmoment von geringem Betrag ist, während dann, wenn Fahrer sein Lenkrad mit hoher Kraft festhält, geregelt eine entsprechende Lenkmoment-Funktion mit höherem Betrag des maximalen Lenkmoments an das Lenkrad angelegt wird. Vorteilhafte Weiterbildungen sind Inhalt der Unteransprüche.

Zunächst sei darauf hingewiesen, dass vorliegend ein Fahrerassistenzsystem beansprucht wird und somit eine elektronische Steuereinheit, in welcher die beschriebenen bzw. beanspruchten Merkmale umgesetzt sind bzw. mit welcher die beschriebenen bzw. beanspruchten Verfahrensschritte ausgeführt werden bzw. ausgeführt werden können. Insofern könnten die vorliegenden Patentansprüche auch als Verfahrensansprüche formuliert werden, d.h. es könnte unter Verwendung der Merkmale des Oberbegriffs des Anspruchs 1 ein Verfahren zum Anlegen eines Lenkmoments an das Lenkrad des Fahrers eines nicht spurgebundenen Fahrzeugs mittels eines Elektromotors oder dergleichen beansprucht werden, wobei mittels dieses Lenkmoments eine richtungsorientierte Lenkempfehlung an den Fahrer gegeben wird, und wobei die kennzeichnenden Merkmale eines solchermaßen modifizierten unabhängigen Patentanspruchs 1 gleich den vorliegenden kennzeichnenden Merkmalen sein können. In der täglichen Praxis wird jedoch zunehmend von Fahrerassistenzsystemen gesprochen, die entsprechende Verfahrensschritte ausführen, weshalb die vorliegenden Patentansprüche auf ein Fahrerassistenzsystem gerichtet sind. Selbstverständlich sind auch die abhängigen Ansprüche durch einfaches Umformulieren als Verfahrensansprüche abfassbar bzw. können als solche verstanden werden.

Nunmehr auf die kennzeichnenden Merkmale des Anspruchs 1 eingehend wird im Hinblick darauf, dass einerseits eine sichere Wahrnehmung der Lenkempfehlung durch den Fahrer auch dann, wenn dieser das Lenkrad festhält, gewährleistet sein soll und sich gleichzeitig im Falle, dass der Fahrer das Lenkrad nicht oder kaum festhält, keine übermäßige Abweichung der Ausrichtung (Orientierung) des Fahrzeugs von seiner ursprünglichen Fahr-Trajektorie ergeben soll, quasi ein automatisches Gegenlenken (mit entgegengesetztem Drehsinn) zur vorhergehend abgegebenen Lenkempfehlung (bzw. zu deren Drehsinn) vorgeschlagen. Dieses automatische Gegenlenken wird vorzugsweise vom gleichen Motor initiiert, der auch das die Lenkempfehlung darstellende Lenkmoment an das Lenkrad anlegt und es soll dieses Gegenlenken für den Fahrer am Lenkrad möglichst wenig oder zumindest nennenswert geringer spürbar sein als die vorhergehende Lenkempfehlung.

In diesem Sinne ist es möglich, dementsprechende hinsichtlich ihres für den Fahrer spürbaren Betrags unterschiedliche Lenkmomente bzw. zumindest zeitliche Verläufe desselben, also unterschiedliche sog. Lenkmoment-Funktionen an das Lenkrad anzulegen. Es kann also die besagte Lenkempfehlung durch stoßartiges Anlegen eines Lenkmoments an das Lenkrad des Fahrers abgegeben werden und zeitlich anschließend an diese Lenkempfehlung (in Form eines Lenkmoments) ein diesem Lenkmoment entgegen gerichtetes und dieses zumindest annähernd neutralisierendes Lenkmoment von geringerem Betrag und entsprechend längerer Zeitdauer an das Lenkrad angelegt werden. In einer bevorzugten Ausführungsform kann dabei der Betrag des Integrals des eine Lenkempfehlung darstellenden Lenkmoments über dessen Wirkungsdauer im Wesentlichen gleich dem Betrag des Integrals des zumindest annähernd neutralisierenden Lenkmoments über dessen Wirkungsdauer sein, so dass jedenfalls hinsichtlich des im Rahmen der Lenkempfehlung eingeleiteten Lenkmoments ein vollständige Neutralisierung erfolgt; die Ausrichtung des Fahrzeugs selbst ist dadurch jedoch noch nicht korrigiert. Letzteres kann - wie an späterer Stelle näher ausgeführt wird - anschließend ebenfalls selbsttätig und dabei vorzugsweise solchermaßen dosiert, dass der Fahrer dies nicht als weitere Lenkempfehlung interpretiert, durchgeführt werden.

Das Anlegen entsprechender Lenkmomente bzw. Lenkmoment-Funktionen als solcher ist jedoch nur eine besondere Ausführungsform der vorliegenden Erfindung; allgemeiner lässt sich die vorliegende Erfindung durch eine geeignete Ansteuerung des diese Lenkmoment-Funktionen darstellenden Motors (Stellmotors, Elektromotors) dahingehend beschreiben, dass am Lenkrad des Fahrers gewisse Lenkwinkel, hier Lenkrad-Winkel genannt, mit unterschiedlichen Stell-Geschwindigkeiten, d.h. verschiedenen Winkelgeschwindigkeiten (als mathematischer Ableitung des Lenkrad-Winkels über der Zeit) gestellt werden bzw. zumindest gestellt werden sollen. Letzteres, nämlich das Soll-Stellen eines Lenkrad-Winkels gilt für den Fall, dass der Fahrer sein Lenkrad derart fest hält, dass mit sinnvoll dimensionierten Stellmotoren kein solch hohes Lenkmoment aufgebracht werden kann, dass tatsächlich ein entsprechender Lenkrad-Winkel gestellt werden kann. Unabhängig von der Kraft, mit welcher der Fahrer sein Lenkrad festhält, ist jedoch eine (wenn auch nur geringfügige) Änderung des Lenkrad-Winkels mit einer betragsmäßig größeren Winkelgeschwindigkeit für den Fahrer stets bestmöglich haptisch spürbar und insbesondere signifikant stärker spürbar als eine (vorzugsweise auch nur geringfügige) Änderung des Lenkrad-Winkels mit einer betragsmäßig geringeren Winkelgeschwindigkeit.

Wenn der Fahrer sein Lenkrad mit extrem niedriger Kraft festhält oder falls er das Lenkrad überhaupt nicht festhält ist eine Lenkempfehlung in Form einer mit betragsmäßig größerer Winkelgeschwindigkeit erfolgenden Änderung des Lenkrad-Winkels auch optisch über die Lenkrad-Bewegung oder anhand der Änderung der Ausrichtung des Fahrzeugs bestmöglich wahrnehmbar. Aber auch dann, wenn der Fahrer sein Lenkrad stark festhält, ist eine erfindungsgemäße Änderung des Lenkrad-Winkels mit größerer Winkelgeschwindigkeit für den Fahrer zumindest haptisch deutlich spürbar, da sich mit einem zur Darstellung dieser Winkelgeschwindigkeit entsprechend hohen Lenkmoment zumindest eine geringe und somit spürbare Änderung des Lenkrad-Winkels ergeben wird. Hingegen wird die anschließende erfindungsgemäße Änderung des Lenkrad-Winkels mit erheblich geringerer Winkelgeschwindigkeit im der zuvor abgegebenen Lenkempfehlung entgegengesetzten Drehsinn unabhängig davon, wie stark der Fahrer sein Lenkrad festhält, vom Fahrer kaum wahrgenommen, und zwar weder haptisch noch visuell.

Aus vorstehender Erläuterung wird auch ein besonderer Vorteil des erfindungsgemäßen Verfahrens, welches von einem erfindungsgemäßen Fahrerassistenzsystem durchgeführt wird, erkennbar. Es wird nämlich dieses Verfahren selbstregelnd durchgeführt, mit der vom Fahrer an das Lenkrad angelegten Kraft als Störgröße. Ist diese Kraft sehr niedrig, so kann das durch den besagten Motor an das Lenkrad angelegte Lenkmoment bzw. die entsprechende zeitliche Lenkmoment-Funktion von geringem Betrag sein, während dann, wenn der Fahrer sein Lenkrad mit hoher Kraft festhält, geregelt eine entsprechende Lenkmoment-Funktion mit höherem Betrag des maximalen Lenkmoments an das Lenkrad angelegt werden kann.

Indem wie grundsätzlich vorgeschlagen das Fahrerassistenzsystem bei Ausführung des erfindungsgemäßen Verfahrens zunächst mit höherer Winkelgeschwindigkeit und somit für den Fahrer deutlich wahrnehmbar das Lenkrad um einen gewissen wenn auch gegebenenfalls nur geringen Winkel in die mit der Lenkempfehlung übereinstimmende Richtung verdreht und anschließend das Lenkrad mit geringerer Winkelgeschwindigkeit und somit für den Fahrer zumindest weniger und vorzugsweise praktisch nicht wahrnehmbar in die entgegengesetzte Richtung zurück dreht, ist die Auswirkung einer solchen Lenkempfehlung auf die Ausrichtung des Fahrzeugs (genauer von dessen Längsachse) geringer als im Stand der Technik, bei welchem lediglich die Lenkempfehlung abgegeben wird, jedoch kein anschließendes automatisches Lenken im entgegengesetzten Drehsinn erfolgt. Dabei kann der mit der geringeren Winkelgeschwindigkeit gestellte und somit für den Fahrer zumindest weniger wahrnehmbare Lenkrad-Winkel (im entgegengesetzten Drehsinn) betragsmäßig im wesentlichen gleich dem vorhergehend mit der größeren Winkelgeschwindigkeit gestellten und somit für den Fahrer intensiver wahrnehmbaren Lenkrad-Winkel sein. Dann befindet sich jedenfalls das Lenkrad nach vollständiger Durchführung einer solchen Lenkempfehlung vorteilhafterweise wieder in seiner ursprünglichen Winkel-Position.

Im Sinne einer vorteilhaften Weiterbildung kann vorgesehen sein, dass im Anschluss an das Stellen des den entgegengesetzten Drehsinn aufweisenden Lenkrad-Winkels vorzugsweise ebenfalls mit geringerer Winkelgeschwindigkeit ein weiterer Lenkrad-Winkel oder zumindest ein weiterer an lenkbaren Rädern des Fahrzeugs wirkender Lenkwinkel automatisch, d.h. durch das erfindungsgemäße Fahrerassistenzsystem gestellt wird, durch den das Fahrzeug in einem geradlinigen Fahrbahnverlauf im wesentlichen in die vor der Abgabe der richtungsorientierten Lenkempfehlung innegehabte Ausrichtung überführt wird. Damit wird nicht nur der durch die Lenkempfehlung in das Lenksystem des Fahrzeugs eingeleitete Lenkwinkel quasi neutralisiert, sondern es wird der mit dieser Lenkempfehlung in das Lenksystem des Fahrzeugs eingeleitete Lenkimpuls hinsichtlich der Fahrzeug-Ausrichtung vorteilhafterweise selbsttätig rückgängig gemacht, so dass sich diese Lenkempfehlung also nur in Form eines geringen seitlichen Versatzes des Fahrzeugs gegenüber dem Zustand vor dieser Lenkempfehlung auswirkt. Vorzugsweise erfolgt dieses selbsttätige gezielte Ausrichten des Fahrzeugs ebenfalls solchermaßen dosiert, dass der Fahrer dies kaum bzw. zumindest in erheblich geringeren Maße wahrnimmt als die zuvor am Lenkrad erzeugte bzw. an dieses in Form eines Moments angelegte Lenkempfehlung.

Ein erfindungsgemäßes Fahrerassistenzsystem kann in besonders vorteilhafter Weise mit einem Fahrzeug-Lenksystem zusammenwirken, welches mit einem Überlagerungssystem ausgerüstet ist, mit welchem dem vom Fahrer am Lenkrad vorgegebenen Lenkwinkel ein weiterer an den lenkbaren Rädern wirksamer Zusatz-Lenkwinkel hinzufügbar ist, vgl. hierzu bspw. die DE 103 07 475 A1, womit das Übersetzungsverhältnis zwischen dem Lenkrad und den lenkbaren Rädern veränderbar ist. Mit einem solchen Überlagerungssystem kann im Sinne einer weiteren Verbesserung des erfindungsgemäßen Verfahrens bei Abgabe einer richtungsorientierten Lenkempfehlung über das Lenkrad und beim darauffolgenden automatischen Stellen eines Lenkrad-Winkels im entgegengesetzten Drehsinn vom Überlagerungssystem jeweils ein dem gestellten Lenkrad-Winkel entgegen gerichteter Zusatz-Lenkwinkel eingestellt werden, so dass die Auswirkung des als Lenkempfehlung dargestellten Lenkrad-Drehwinkels sowie des anschließenden erfindungsgemäßen langsameren Zurückdrehen des Lenkrads an den lenkbaren Rädern reduziert wird. Alternativ oder zusätzlich kann für das weiterhin vorgeschlagene Ausrichten des Fahrzeugs in einem geradlinigen Fahrbahnverlauf zumindest annähernd in die vor der Abgabe der Lenkempfehlung innegehabte Ausrichtung ebenfalls ein hierfür geeigneter Zusatz-Lenkwinkel im Überlagerungssystem eingestellt werden.

Ein erfindungsgemäßes Fahrerassistenzsystem kann in vorteilhafter Weise mit einem Fahrzeug-Lenksystem zusammenwirken, bei welchem zusätzlich zu den über das Lenkrad lenkbaren Vorderrädern auch die Hinterräder des Fahrzeugs zumindest geringfügig lenkbar sind. Damit kann bei Abgabe einer richtungsorientierten Lenkempfehlung über das Lenkrad und beim darauffolgenden automatischen Stellen eines Lenkrad-Winkels im entgegengesetzten Drehsinn jeweils ein gleichsinniger Lenkwinkel an den Hinterrädern des Fahrzeugs eingestellt werden, womit die Gierbewegung des Fahrzeugs reduziert wird und das Fahrzeug im wesentlichen geringfügig seitlich versetzt wird, dabei jedoch seine ursprüngliche Ausrichtung (in einem geradlinigen Fahrbahnverlauf) im wesentlichen beibehält. Sollte letzteres nicht vollständig erfüllt sein, so kann alternativ oder zusätzlich für das weiterhin vorgeschlagene Ausrichten des Fahrzeugs in einem geradlinigen Fahrbahnverlauf zumindest annähernd in die vor der Abgabe der Lenkempfehlung innegehabte Ausrichtung ebenfalls ein hierfür geeigneter Lenkwinkel an den lenkbaren Hinterrädern des Fahrzeugs eingestellt werden.

Ein erfindungsgemäßes Fahrerassistenzsystem kann in vorteilhafter Weise mit einem Fahrzeug-Bremssystem zusammenwirken, mit welchem dem Fahrzeug durch einseitiges Bremsen unabhängig vom Lenksystem ein Giermoment aufgeprägt werden kann, so wie dies bei den gängigen elektronischen Stabilisierungsprogrammen (ESP, DSC der Fahrdynamikregelung) Stand der Technik ist. Im Zusammenwirken mit einem solchen System kann bei Abgabe einer richtungsorientierten Lenkempfehlung über das Lenkrad und beim darauffolgenden automatischen Stellen eines Lenkrad-Winkels durch einseitiges Bremsen ein dem jeweiligen Lenkrad-Winkel entgegen gerichtetes Giermoment erzeugt werden, womit die Gierbewegung des Fahrzeugs reduziert wird und das Fahrzeug im wesentlichen geringfügig seitlich versetzt wird, dabei jedoch seine ursprüngliche Ausrichtung (in einem geradlinigen Fahrbahnverlauf) im wesentlichen beibehält. Sollte letzteres nicht vollständig erfüllt sein, so kann alternativ oder zusätzlich für das weiterhin vorgeschlagene Ausrichten des Fahrzeugs in einem geradlinigen Fahrbahnverlauf zumindest annähernd in die vor der Abgabe der Lenkempfehlung innegehabte Ausrichtung ebenfalls ein hierfür geeignetes Giermoment durch einseitiges Bremsen erzeugt werden.

Es wurde bereits erwähnt, dass bei einem erfindungsgemäßen Fahrerassistenzsystem der oder ein das oder die entsprechenden Lenkmomente zum Stellen der besagten Lenkrad-Winkel an das Lenkrad anlegende Elektromotor oder Stellmotor hinsichtlich der anzulegenden Lenkmoment-Funktion einer Regelung mit geschlossenem Regelkreis unterworfen werden kann. Hierbei kann die Regelung hinsichtlich bestimmter mit unterschiedlicher Winkelgeschwindigkeit und verschiedenem Drehsinn einzustellenden Lenkrad-Winkeln durchgeführt werden, alternativ kann auch die jeweilige Winkelgeschwindigkeit, mit der das Lenkrad zumindest minimal verdreht wird, in Abhängigkeit der vorliegenden Randbedingungen, so insbesondere in Abhängigkeit von der Kraft, mit welcher der Fahrer sein Lenkrad festhält, auf bestimmte vorgegebene Werte geregelt werden. Alternativ kann aber auch eine Steuerung (Vorsteuerung) vorgesehen sein, dahingehend, dass bestimmte zeitliche Lenkmoment-Funktionen für den besagten Elektromotor/Stellmotor vorgesehen sind, bei Durchführung derer für die Abgabe einer richtungsorientierten Lenkempfehlung zunächst ein Lenkrad-Winkel im empfohlenen Drehsinn mit einer betragsmäßig größeren Winkelgeschwindigkeit gestellt wird und danach mit einer betragsmäßig geringeren Winkelgeschwindigkeit ein Lenkrad-Winkel im entgegengesetzten Drehsinn gestellt wird.

Bei einem erfindungsgemäßen Fahrerassistenzsystem können bei der Ansteuerung des das oder die entsprechenden Lenkmomente an das Lenkrad anlegenden Elektromotors oder Stellmotors mögliche Reibungseffekte im zugehörigen Lenksystem des Fahrzeugs geeignet berücksichtigt werden, d.h. insbesondere Reibungsverluste, welche die für den Fahrer an seinem Lenkrad spürbare Auswirkung reduzieren, können solchermaßen bei der Ansteuerung des besagten Stellmotors berücksichtigt werden, dass der Fahrer die Lenkempfehlung wie gewünscht sicher erkennen kann, während das darauf folgende "Gegenlenken" zum zumindest teilweisen Neutralisieren des aus dieser Lenkempfehlung auf das Fahrzeug wirkenden Lenkvorgangs für den Fahrer praktisch nicht oder zumindest erheblich weniger spürbar oder erkennbar ist.

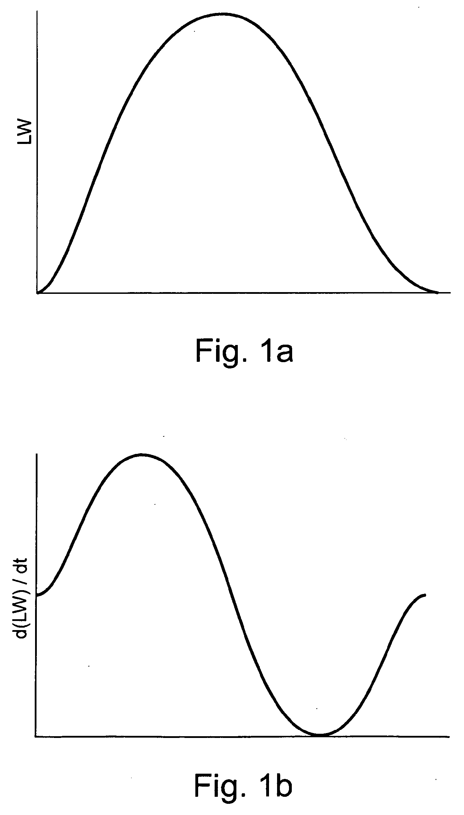

In den beigefügten Figur 1a, 1b ist eine mögliche erfindungsgemäße Lenkmoment-Funktion über der Zeit t auf der jeweiligen Abszisse dargestellt, wobei das obere Diagramm (Fig.1a) den gestellten Lenkwinkel LW auf der Ordinate und das untere Diagramm (Fig. 1b) die zugehörige Winkelgeschwindigkeit (d(LW)/dt) auf der Ordinate zeigt.

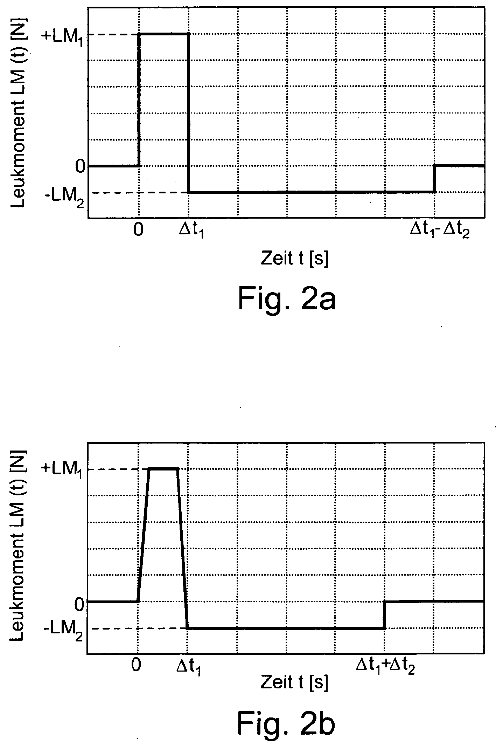

In den Figuren 2a, 2b sind zwei Beispiele möglicher zeitlicher Verläufe erfindungsgemäß angelegter Lenkmomente unter Verwendung der folgenden Bezeichnungen dargestellt: Mit LM₁ ist das das eine Lenkempfehlung darstellende Lenkmoment bezeichnet, welches während einer ersten Zeitspanne Δt₁ an das Lenkrad angelegt wird und es ist mit LM₂ das dieses Lenkmoment LM₁ im Wesentlichen neutralisierende Gegen-Lenkmoment bezeichnet, welches während einer darauf folgenden zweiten Zeitspanne Δt₂ an das Lenkrad angelegt wird.

Beim Ausführungsbeispiel nach den Figuren 2a, 2b wird, um einerseits eine sichere Wahrnehmung des Lenkhinweises durch den Fahrer auch dann, wenn dieser das Lenkrad festhält, zu gewährleisten und um gleichzeitig im Falle, dass der Fahrer das Lenkrad nicht oder kaum festhält, keine signifikante End-Drehgeschwindigkeit des Lenkrads durch das stoßartige Anlegen eines Lenkmoments vom Fahrerassistenzsystem zu erhalten, quasi ein selbsttätiges Gegenmoment zur vorhergehend abgegebenen Lenkempfehlung vorgeschlagen, welches ebenfalls vom Fahrerassistenzsystem an das Lenkrad angelegt wird. Dieses Gegenmoment soll für den Fahrer am Lenkrad jedoch möglichst wenig oder zumindest nennenswert geringer spürbar sein als die vorhergehende Lenkempfehlung, weswegen der Betrag des der Lenkempfehlung entgegen gerichteten und diese quasi neutralisierenden Gegen-Lenkmoments geringer gewählt wird als der Betrag des die Lenkempfehlung darstellenden Lenkmoments. Es wird also im Anschluss an die eigentliche Lenkempfehlung mit einem maximalen Betrag von |LM1| ein entgegengesetzt gerichtetes sog. "neutralisierendes" Lenkmoment von vorzugsweise deutlich kleinerem Betrag |LM2| (mit |LM2|<< |LM1|) aufgeschaltet. Um dabei eine Neutralität der Lenkrad-Drehgeschwindigkeit am Ende des vollständigen Eingriffs (bestehend aus der Lenkempfehlung und dem Gegenmoment) zu gewährleisten, wird vorgeschlagen, das betragsmäßig größere Moment der Lenkempfehlung für eine kürzere Zeitdauer (Δt1) und das betragsmäßig kleinere der Lenkempfehlung entgegen gerichtete Gegen-Lenkmoment für eine (entsprechend) längere Zeitdauer (Δt2) aufzuschalten. Diese längere Zeitdauer (Δt2) ergibt sich idealerweise aus der Forderung, dass das Integral des wirksamen Lenkmoments über dem Gesamtzeitraum (Δtges = Δt1 + Δt2) des vollständigen Eingriffs hinweg zumindest annähernd den Wert "Null" annehmen sollte. In diesem Sinne kann also der Betrag des (mathematischen) Integrals des eine Lenkempfehlung darstellenden Lenkmoments über dessen Wirkungsdauer im Wesentlichen gleich dem Betrag des (mathematischen) Integrals des neutralisierenden Gegen-Lenkmoments über dessen Wirkungsdauer sein.

Ausdrücklich sei darauf hingewiesen, dass zur Erzielung der erfindungsgemäßen Wirkung keine vollständige (mathematische) Gleichheit der Beträge der Integrale des eine Lenkempfehlung darstellenden Lenkmoments und des neutralisierenden Gegen-Lenkmoments dargestellt werden muss. Vielmehr kann eine grobe Übereinstimmung ausreichend sein, da der Fahrer geringe Abweichungen auch nach Ablauf seiner Reaktionszeit einfach ausgleichen kann. Ferner sei darauf hingewiesen, dass das neutralisierende Gegen-Lenkmoment möglichst direkt im Anschluss an das eine Lenkempfehlung darstellende Lenkmoment an das Lenkrad angelegt werden sollte, so wie dies in den Figuren 2a, 2b dargestellt ist. Jedoch kann zwischen dem eine Lenkempfehlung darstellenden Lenkmoment (LM1) und dem neutralisierenden Gegen-Lenkmoment (LM2) durchaus für eine kurze Zeitspanne seitens des Fahrerassistenzsystems überhaupt kein Moment an das Lenkrad angelegt werden.

Die hier vorgeschlagenen Maßnahmen führen im Falle, dass das Lenkrad vom Fahrer nicht oder nahezu nicht festgehalten wird, im Anschluss an eine vom Assistenzsystem abgegebene Lenkempfehlung zu einer erheblich geringeren Auswirkung eines solchen Assistenz-Eingriffs auf die Fahr-Trajektorie des Fahrzeugs. Als Folge entspricht die Orientierung oder Ausrichtung des Fahrzeugs nach einem solchen erfindungsgemäßen Assistenz-Eingriff zumindest im wesentlichen der Ausgangs-Orientierung vor diesem Eingriff. Vom Fahrer nicht erwartete Situationen können somit vermieden werden. Gleichzeitig werden bei festgehaltenem Lenkrad die Wahrnehmung des Lenkhinweises, sowie die Reaktion darauf durch den Fahrer aufgrund der vorgeschlagenen Maßnahme nicht nennenswert beeinträchtigt.

## Patentansprüche

1. Fahrerassistenzsystem eines nicht spurgebundenen Fahrzeugs, das durch Anlegen eines Lenkmoments an das Lenkrad des Fahrers mittels eines Elektromotors oder dergleichen eine richtungsorientierte Lenkempfehlung an den Fahrer gibt,
**dadurch gekennzeichnet, dass** durch dieses Lenkmoment zunächst ein Lenkrad-Winkel im empfohlenen Drehsinn mit einer betragsmäßig größeren Winkelgeschwindigkeit gestellt wird oder zumindest gestellt werden soll und dass danach mit einer betragsmäßig geringeren Winkelgeschwindigkeit ein Lenkrad-Winkel im entgegengesetzten Drehsinn gestellt wird oder zumindest gestellt werden soll, wobei dieses Verfahren mit der vom Fahrer an das Lenkrad angelegten Kraft als Störgröße selbstregelnd durchgeführt wird, indem bei niedriger vom Fahrer an das Lenkrad angelegten Kraft das durch den besagten Elektromotor an das Lenkrad angelegte Lenkmoment von geringem Betrag ist, während dann, wenn Fahrer sein Lenkrad mit hoher Kraft festhält, geregelt eine entsprechende Lenkmoment-Funktion mit höherem Betrag des maximalen Lenkmoments an das Lenkrad angelegt wird.

2. Fahrerassistenzsystem nach Anspruch 1, **dadurch gekennzeichnet, dass** der mit der geringeren Winkelgeschwindigkeit gestellte Lenkrad-Winkel betragsmäßig im wesentlichen gleich dem mit der größeren Winkelgeschwindigkeit gestellten Lenkrad-Winkel ist.

3. Fahrerassistenzsystem nach Anspruch 1 oder 2, **dadurch gekennzeichnet, dass** im Anschluss an das Stellen des den entgegengesetzten Drehsinn aufweisenden Lenkrad-Winkels ein weiterer an lenkbaren Rädern des Fahrzeugs wirksamer Lenk-Winkel gestellt wird, durch den das Fahrzeug in einem geradlinigen Fahrbahnverlauf im wesentlichen in die vor der Abgabe der richtungsorientierten Lenkempfehlung innegehabte Ausrichtung überführt wird.

4. Fahrerassistenzsystem nach einem der vorangegangenen Ansprüche, wobei das Lenksystem des Fahrzeugs mit einem Überlagerungssystem ausgerüstet ist, mit welchem dem vom Fahrer über das Lenkrad vorgegebenen Lenkwinkel ein weiterer an den lenkbaren Rädern wirksamer Zusatz-Lenkwinkel hinzufügbar ist, **dadurch gekennzeichnet, dass** bei Abgabe einer richtungsorientierten Lenkempfehlung über das Lenkrad und beim darauffolgenden automatischen Stellen eines Lenkrad-Winkels im entgegengesetzten Drehsinn vom Überlagerungssystem jeweils ein dem gestellten Lenkrad-Winkel entgegen gerichteter Zusatz-Lenkwinkel eingestellt wird,
und/oder dass in einem geradlinigen Fahrbahnverlauf zur Ausrichtung des Fahrzeugs zumindest annähernd in die vor der Abgabe der richtungsorientierten Lenkempfehlung innegehabten Ausrichtung ein hierfür geeigneter Zusatz-Lenkwinkel eingestellt wird.

5. Fahrerassistenzsystem nach einem der vorangegangenen Ansprüche, wobei zusätzlich zu den über das Lenkrad lenkbaren Vorderrädern auch die Hinterräder des Fahrzeugs zumindest geringfügig lenkbar sind, **dadurch gekennzeichnet, dass** bei Abgabe einer richtungsorientierten Lenkempfehlung über das Lenkrad und beim darauffolgenden automatischen Stellen eines Lenkrad-Winkels im entgegengesetzten Drehsinn jeweils ein gleichsinniger Hinterrad-Lenkwinkel eingestellt wird,
und/oder dass in einem geradlinigen Fahrbahnverlauf zur Ausrichtung des Fahrzeugs zumindest annähernd in die vor der Abgabe der richtungsorientierten Lenkempfehlung innegehabten Ausrichtung ein hierfür geeigneter Hinterrad-Lenkwinkel eingestellt wird.

6. Fahrerassistenzsystem nach einem der vorangegangenen Ansprüche, wobei dem Fahrzeug durch einseitiges Bremsen unabhängig vom Lenksystem ein Giermoment aufgeprägt werden kann, **dadurch gekennzeichnet, dass** bei Abgabe einer richtungsorientierten Lenkempfehlung über das Lenkrad und beim darauffolgenden automatischen Stellen eines Lenkrad-Winkels durch einseitiges Bremsen ein dem jeweiligen Lenkrad-Winkel entgegen gerichtetes Giermoment erzeugt wird,
und/oder dass in einem geradlinigen Fahrbahnverlauf zur Ausrichtung des Fahrzeugs zumindest annähernd in die vor der Abgabe der richtungsorientierten Lenkempfehlung innegehabten Ausrichtung durch einseitiges Bremsen ein hierfür geeignetes Giermoment erzeugt wird.

7. Fahrerassistenzsystem nach einem der vorangegangenen Ansprüche, wobei die besagte Lenkempfehlung durch stoßartiges Anlegen eines Lenkmoments an das Lenkrad des Fahrers abgegeben wird und wobei zeitlich anschließend an diese Lenkempfehlung in Form eines Lenkmoments ein diesem Lenkmoment entgegen gerichtetes und dieses zumindest annähernd neutralisierendes Lenkmoment von geringerem Betrag und entsprechend längerer Zeitdauer an das Lenkrad angelegt wird.

8. Fahrerassistenzsystem nach Anspruch 7, **dadurch gekennzeichnet, dass** der Betrag des Integrals des eine Lenkempfehlung darstellenden Lenkmoments über dessen Wirkungsdauer im Wesentlichen gleich dem Betrag des Integrals des neutralisierenden Lenkmoments über dessen Wirkungsdauer ist.

9. Fahrerassistenzsystem nach einem der vorangegangenen Ansprüche, **dadurch gekennzeichnet, dass** bei der Ansteuerung des das oder die entsprechenden Lenkmomente an das Lenkrad anlegenden Elektromotors oder Stellmotors mögliche Reibungseffekte im zugehörigen Lenksystem des Fahrzeugs berücksichtigt werden.

## Claims

1. A driver assistance system of a non-track bound vehicle which provides the driver with a direction-oriented steering recommendation by applying a steering torque to the driver's steering wheel by an electric motor or the like, **characterised in that** as a result of this steering torque, a steering wheel angle is initially set or at least is to be set in the recommended direction of rotation with an angular velocity of a relatively high magnitude and that thereafter a steering wheel angle is set or at least is to be set in the opposite direction of rotation with an angular velocity of a relatively low magnitude, this procedure being carried out in a self-regulating manner using the force applied by the driver to the steering wheel as a disturbance variable, **in that** when the driver applies a low force to the steering wheel, the steering torque applied to the steering wheel by said electric motor is of a low magnitude, whereas when the driver holds the steering wheel with a high force, a corresponding steering torque function with a greater magnitude of the maximum steering torque is applied in a regulated manner to the steering wheel.

2. A driver assistance system according to claim 1, **characterised in that** the steering wheel angle set at the lower angular velocity is substantially equal in magnitude to the steering wheel angle set at the higher angular velocity.

3. A driver assistance system according to claim 1 or claim 2, **characterised in that** following the setting of the steering wheel angle in the opposite direction of rotation, a further steering angle is set which acts on steerable wheels of the motor vehicle and by which the motor vehicle is changed along the course of a straight road substantially into the orientation held before making the direction-oriented steering recommendation.

4. A driver assistance system according to any one of the preceding claims, wherein the steering system of the vehicle is fitted with a superimposing system by which a further additional steering angle which acts on the steerable wheels can be added to the steering angle preset by the driver via the steering wheel, **characterised in that** when a direction-oriented steering recommendation is made via the steering wheel and when a steering wheel angle is subsequently automatically set in the opposite direction of rotation, a respective additional steering angle directed against the set steering wheel angle is set by the superimposing system, and/or **in that** along the course of a straight road, a suitable additional steering angle is set to orient the vehicle at least approximately into the orientation held before making the direction-oriented steering recommendation.

5. A driver assistance system according to any one of the preceding claims, wherein in , addition to the front wheels steerable by the steering wheel, the rear wheels of the vehicle are also at least slightly steerable, **characterised in that** when a direction-oriented steering recommendation is made via the steering wheel and when a steering wheel angle is subsequently automatically set in the opposite direction of rotation, a respective rear wheel steering angle in the same direction is set and/or **in that** along the course of a straight road, a suitable rear wheel steering angle is set to orient the vehicle at least approximately into the orientation held before making the direction-oriented steering recommendation.

6. A driver assistance system according to any one of the preceding claims, wherein a yaw moment can be impressed on the vehicle by unilateral braking independently of the steering system, **characterised in that** when a direction-oriented steering recommendation is made via the steering wheel and when a steering wheel angle is subsequently automatically set, a yaw moment directed against the respective steering wheel angle is generated by unilateral braking, and/or **in that** along the course of a straight road, a suitable yaw moment is generated by unilateral braking to orient the vehicle at least approximately into the orientation held before making the direction-oriented steering recommendation

7. A driver assistance system according to any one of the preceding claims, wherein said steering recommendation is made by jerkily applying a steering torque to the driver's steering wheel and wherein subsequent to this steering recommendation in the form of a steering torque, a steering torque, directed against this steering torque and of a smaller magnitude and of a correspondingly longer duration is applied to the steering wheel and it at least approximately neutralises the jerkily applied steering torque.

8. A driver assistance system according to claim 7, **characterised in that** the value of the integral of the steering torque representing a steering recommendation over the effective duration thereof is substantially equal to the value of the integral of the neutralising steering torque over the effective duration thereof.

9. A driver assistance system according to any one of the preceding claims, **characterised in that** during the control of the electric motor or servomotor applying the corresponding steering torque or torques to the steering wheel, possible friction effects in the associated steering system of the vehicle are considered.

## Revendications

1. Système d'assistance d'un conducteur d'un véhicule non guidé sur rail qui donne, au conducteur par application d'un couple de braquage sur son volant de direction, au moyen d'un moteur électrique ou similaire une recommandation de braquage à orientation directionnelle,
**caractérisé en ce que**
par ce couple de braquage, tout d'abord, un angle du volant dans le sens de rotation recommandé est réglé ou au moins doit être réglé avec une vitesse angulaire relativement élevée, puis, un angle du volant est réglé ou au moins doit être réglé dans le sens de rotation opposé avec une vitesse angulaire relativement plus faible, ce procédé étant mis en oeuvre de façon autorégulée avec la force appliquée par le conducteur sur le volant en tant que grandeur perturbatrice, de sorte que, en présence d'une faible force appliquée par le conducteur sur le volant, le couple de braquage appliqué par le moteur électrique sur le volant soit faible, tandis que lorsque le conducteur maintient son volant avec une force importante, de façon contrôlée, une fonction de couple de braquage correspondante est appliquée sur le volant avec une valeur supérieure du couple de braquage maximum.

2. Système d'assistance d'un conducteur conforme à la revendication 1,
**caractérisé en ce que**
l'angle du volant réglé avec la faible vitesse angulaire est relativement égal à l'angle du volant réglé avec la vitesse angulaire plus élevée.

3. Système d'assistance d'un conducteur conforme à la revendication 1 ou 2,
**caractérisé en ce qu'**
après le réglage de l'angle du volant présentant le sens de rotation opposé, est réglé un autre angle de braquage actif sur les roues directrices du véhicule, par lequel le véhicule est transféré, dans une trajectoire essentiellement en ligne droite selon l'orientation tenue avant la délivrance de la recommandation de braquage à orientation directionnelle.

4. Système d'assistance d'un conducteur conforme à l'une des revendications précédentes, selon lequel le système de braquage du véhicule est équipé d'un système de superposition par lequel, à l'angle de braquage prédéfini par le conducteur par l'intermédiaire du volant peut être ajouté, un autre angle de braquage actif sur les roues directrices,
**caractérisé en ce qu'**
en présence de la délivrance d'une recommandation de braquage à orientation directionnelle, sur le volant, et d'un réglage automatique suivant d'un angle du volant dans le sens de rotation opposé, respectivement un angle de braquage supplémentaire orienté à l'opposé de l'angle de braquage du volant réglé est ajusté par le système de superposition, et/ou
dans une trajectoire en ligne droite pour orienter le véhicule au moins approximativement selon l'orientation tenue avant la délivrance de la recommandation de braquage à orientation directionnelle, un angle de braquage supplémentaire adapté dans ce sens est réglé.

5. Système d'assistance d'un conducteur conforme à l'une des revendications précédentes, selon lequel en plus des roues avant pouvant être braquées par l'intermédiaire du volant, les roues arrières du véhicule peuvent également être braquées au moins dans une faible mesure, **caractérisé en ce que**, lors de la délivrance d'une recommandation de braquage à orientation directionnelle, sur le volant, et du réglage automatique suivant d'un angle du volant dans le sens de rotation opposé, un angle de braquage de la roue arrière dans le même sens est réglé, et/ou
dans une trajectoire en ligne droite pour orienter le véhicule au moins approximativement selon l'orientation tenue avant la délivrance de la recommandation de braquage à orientation directionnelle, un angle de braquage de la roue arrière adaptée dans ce sens est réglé.

6. Système d'assistance d'un conducteur conforme à l'une des revendications précédentes, selon lequel par freinage unilatéral, un couple de lacet peut être imparti au véhicule indépendamment du système de braquage,
**caractérisé en ce que**
lors de la délivrance d'une recommandation de braquage à orientation directionnelle sur le volant, et du réglage automatique suivant d'un angle du volant, un couple de lacets dirigé à l'opposé de l'angle du volant respectif peut être produit par freinage unilatéral, et/ou dans une trajectoire en ligne droite, pour orienter le véhicule au moins approximativement selon l'orientation tenue avant la délivrance de la recommandation de braquage à orientation directionnelle, un couple dé lacet adapté dans ce sens est produit par freinage unilatéral.

7. Système d'assistance d'un conducteur conforme à l'une des revendications précédentes, selon lequel la recommandation de freinage est délivrée par application brusque d'un couple de braquage sur le volant du conducteur, et, après cette recommandation de braquage, sous la forme d'un couple de braquage, un couple de braquage de valeur plus faible et de durée plus longue correspondante, dirigé à l'opposé de ce couple de braquage et neutralisant au moins partiellement celui-ci est appliqué sur le volant.

8. Système d'assistance d'un conducteur conforme à la revendication 7,
**caractérisé en ce que**
la valeur de l'intégrale du couple de braquage représentant une recommandation de braquage sur sa durée d'action est essentiellement similaire à la valeur de l'intégrale du couple de braquage de neutralisation sur sa durée d'action.

9. Système d'assistance d'un conducteur conforme à l'une des revendications précédentes,
**caractérisé en ce que**
lors de la commande du moteur électrique ou du moteur de réglage appliquant le ou les couple(s) de braquage correspondant(s) sur le volant, des effets de friction possibles dans le système de braquage associé du véhicule sont pris en considération.
